# EUROPEAN PATENT SPECIFICATION

(11) **EP 1 142 361 B1**
(45) Date of publication and mention of the grant of the patent: **13.08.2008**
(21) Application number: 00973185.2
(22) Date of filing: 01.11.2000
(51) Int. Cl.: H04Q 7/22

(54) **DATA TRANSMISSION ON WIRELESS NETWORK**
DATENÜBERTRAGUNG IN EINEM DRAHTLOSEN NETZ
TRANSMISSION DE DONNEES DANS UN RESEAU SANS FIL

(30) Priority: 01.11.1999 US 430985
(43) Date of publication of application: 10.10.2001
(73) Proprietor: Celtro Ltd., Petach-Tikva 49527 (IL)
(72) Inventor: ROZENTUL, Reuven, 44856 Kedumin (IL)
(74) Representative: Curell Suñol, Marcelino
(86) International application number: PCT/IL2000/000702
(87) International publication number: WO 2001/033873

(56) References cited:
- WO-A-98/40988
- US-A- 5 384 826
- PETER RYSAVY: "General Packet Radio Service (GPRS)" PCS DATA TODAY, 30 September 1998 (1998-09-30), XP002094882

## Description

### FIELD OF THE INVENTION

The present invention relates to wireless communication networks and particularly to data transmission in cellular networks.

### BACKGROUND OF THE INVENTION

Cellular fixed networks are generally formed of a plurality of base transceiver stations (BTSs) which wirelessly contact mobile units serviced by the network. The BTSs are connected in a tree topology to a regional base station controller (BSC) which controls the routing of calls in the network. The BTSs and BSCs are referred to herein commonly as base stations. In the tree topology, one or more of the BTSs are connected directly to the BSC, and the other BTSs connect to the BSC through other BTSs which serve as relay units. The links of the tree are usually transmission paths of different bandwidths which have room for a predetermined maximal number of concurrent channels. Each channel has bandwidth of 16 Kbit/sec which is the standard for voice calls. Usually, a single BSC is connected to tens or hundreds of BTSs. When a mobile unit participates in a voice call, the BSC allocates, using circuit switching, a path of channels from the BSC to the BTS servicing the mobile. The allocated channels are used only for signals passed to and from the mobile to which the channels were allocated, and the allocation remains in effect until the voice call is terminated. The BSC is connected to a public network or to another BSC to which it sends and from which it receives the signals of the call. The signals received by the BTS from the mobile units in its region are therefore passed through the respective channels of the mobile units.

Cellular networks can be used to transmit data packets, in addition to phone calls. Such data transmission is referred to as a general packet radio service (GPRS) and is described, for example, in a final draft of a European Standard, i.e., GSM 3.60 version 6.3.1 EN 301 344 (1999-04). In accordance with GPRS, the BSCs are connected to GSNs (GRPS Serving Nodes) which pass the data packets to their destinations. For example, the GSNs may serve as gateways to the Internet. In the GPRS environment, a data connection of a mobile unit is allocated a group of eight channels on each link on the path between the servicing BTS and the BSC. The allocated group of channels is used only for data packets to and from the mobile unit to which the group was allocated, throughout the entire duration of a data session. The use of eight channels allows transmission of data packets at a rate of 115 Kbit/sec.

Data packet transmission, does not usually use all the maximal bandwidth it is allocated all the time. Rather, in many instances, for example, when a user is surfing the Internet the mobile unit is waiting for input from the user before downloading more data packets. During this period, the channels allocated to the connection are not used.

In order to minimize the bandwidth waste, when the mobile unit does not transmit or receive data packets along the connection for a predetermined idle time the connection is automatically disconnected. The predetermined idle time is set as a compromise between a long period which is wasteful in bandwidth and a short period which causes many disconnections which in many cases require almost immediate reconnecting. Establishing a connection in a cellular network is time consuming and is therefore annoying to the user of the mobile unit.

Broadcast schemes allow passing data packets to all the mobile units in a certain area. The data may include, for example, traffic information and/or weather information- Using the GPRS service, the data packets containing the information are duplicated for each of the mobile units by the BSC, and a data packet connection of eight channels is established between the BSC and each of the mobiles in order to transmit the data packets. This method requires enormous amounts of bandwidth and therefore the cellular companies have announced that they are postponing the implementation of this service.

Document WO9840988 describes an arrangement for providing access between a telecommunications station and a data network. Access support means are provided which are connected to a server via which a connection can be set-up between a telecommunication station and a data network. A telecommunication station registered with the access support means can be in a connected mode in which the telecommunications station is connected to the server and an intermediate mode in which the telecommunications station is still registered with the access support means but in which it is disconnected from the server. The telecommunication station is only connected when data actually is sent to from the telecommunication station. The invention also relates to access support means, a telecommunications system including such and a method of sending data between a telecommunications station and a data network. In the document of Peter Rysavy: "General Packet Radio Service (GPRS)" PCS DATA TODAY, 30 September 1998, it is described how to extend to mobile workers both work management and office applications. The document analyses the goals, the possible computing platforms and wireless networks and the software approaches. Finally it shows the test results and briefly discusses the changing application landscape.

### SUMMARY OF THE INVENTION

An aspect of some embodiments of the invention relates to tunneling data packets from a plurality of mobile units into a single tunnel of channels. Packets passed through a tunnel are passed on one or more of the channels of the tunnel which channels are selected irrespective of the source, contents and destination of the packet. Thus, packets from a single source to a single destination which are passed through a tunnel may pass through different channels of the tunnel, and channels from different sources and to different destinations may pass on the same channel of the tunnel. Mobile units in data packet sessions do not usually require all the bandwidth they are allocated continuously over long periods of time. Therefore, use of a common tunnel by a plurality of mobile units allows allocating less bandwidth to the mobile units and supplying substantially all the bandwidth requirements of the mobile units on a statistical basis.

In some embodiments of the invention, all the data packets passed on a single link are tunneled into a single tunnel. Possibly, BTSs differentiate between voice signals and data packets and pass all the data packets destined to the BSC through the single tunnel allocated to data packets. Possibly, the number of channels in the tunnel is adjusted as a function of the number of mobile units which are using data services at any specific moment. Optionally, when a relatively large number of mobile units are using data services, the number of allocated channels in the tunnel is between about 1-4 channels per mobile unit.

In some embodiments of the invention, a BTS node which receives data packets from other BTS nodes tunnels all the data packets from the other BTSs into a single tunnel with the data packets from the mobile units the BTS node services. Possibly, the number of channels in the tunnel directed toward the BSC is smaller than the total number of channels in the other links incident on the BTS.

An aspect of some embodiments of the invention relates to defining a semi-connected state for mobiles using data services in a network environment. When the mobile is idle for a predetermined time, the mobile possibly moves into the semi-connected state in order to save wireless bandwidth. In the semi-connected state, the mobile unit does not have any allocated wireless bandwidth for transmissions between the mobile and the servicing BTS. All other allocations of connections, such as registration in the BSC and the number of channels included in the tunnels of the links are left as in the fully connected state. When the mobile needs to transmit while it is in the semi-connected state, the mobile unit sends a request for wireless bandwidth from the BTS. The mobile unit does not need to request bandwidth for the connection between the BTS and the BSC since this bandwidth remains allocated during the semi-connected state.

The most costly part of a cellular connection is the wireless bandwidth. On the other hand, most of the time required in order to establish a cellular connection is due to the connection between the BTS and other parts of a public land mobile network to which the BTS belongs, e.g., the BSC. Only very little time is required in order to allocate wireless bandwidth for connection between the BTS and the mobile unit. Therefore, the time required in order to switch between the semi-connected state and the fully connected state is thus much less than a second such that the user substantially does not feel any delay due to the movement into and out of the semi-connected state.

An aspect of some embodiments of the invention relates to defining for mobile units using data services a short idle period, after which the mobiles move into the semi connected state.

An aspect of some embodiments of the invention relates to a broadcast method of data packets. When the BSC receives a data packet which is to be broadcast it passes a single copy of the packet to each of the BTSs to which it is directly connected. Each BTS passes a single copy of the packet to each of the BTSs to which it is directly connected (except the BTS from which it received the packet), and transmits the packet to all the mobiles in the region of the BTS. Alternatively, the mobile transmits the packet to all the mobiles in its region which are subscribed to a data group to which the packet is addressed. This results in transferring the data packets to the BTS over only one path of channels, no matter how many mobiles the packets are headed to.

There is therefore provided in accordance with some embodiments of the present invention, a method of forwarding packetized signals from a first base station to a second base station, including receiving, at the first base station, of signals from a plurality of mobile units, passing signals from a plurality of different mobile units to the second base station through a single tunnel. Possibly, receiving signals from a plurality of units includes receiving at least some of the signals from one or more third base stations. Possibly, receiving signals from a plurality of units includes receiving general packet radio service data packets.

Possibly, passing the signals through a single tunnel includes passing signals from the same mobile units through different channels included in the tunneL Possibly, receiving signals at the first base station includes receiving signals at a base transceiver station or a base station controller. Possibly, passing signals to the second base station includes passing signals to a base transceiver station.

There is further provided in accordance with some embodiments of the present invention, a method of managing links of a cellular fixed network, including providing a plurality of links which connect base transceiver stations to a base station controller, and allocating at least one tunnel for data packets from a plurality of mobile units, on at least one of the links of the network.

There is further provided in accordance with some embodiments of the present invention, a method of managing links of a cellular fixed network, including providing a plurality of links which connect base transceiver stations to a base station controller, and allocating at least one permanently existing tunnel for data packets on at least one of the links of the network.

Possibly, allocating at least one permanently existing tunnel includes allocating at least one permanently existing tunnel on each of the links of the network. Alternatively or additionally, allocating the at least one permanently existing tunnel includes allocating a single tunnel on each link. Possibly, allocating the tunnel includes allocating at least one tunnel of an adjustable bandwidth. Possibly, the method includes adjusting the bandwidth of the at least one tunnel responsive to a load of the network. Possibly, adjusting the bandwidth of the at least one tunnel includes reducing the ratio between the bandwidth of the tunnel and the number of mobile units which use the tunnel as the number of mobile units using the tunnel increases. Possibly, adjusting the bandwidth of the at least one tunnel includes setting the ratio between the bandwidth of the tunnel and the number of mobile units which use the tunnel to less than eight times the bandwidth used for channels.

There is further provided in accordance with some embodiments of the present invention, a method of managing links of a cellular fixed network, including providing a plurality of links which connect base transceiver stations to a base station controller, and allocating no more than one tunnel for data packets on each of the links of the network.

There is further provided in accordance with some embodiments of the present invention, a method of forwarding data packets by a base transceiver station, including receiving data packets, at the base transceiver station, through a plurality of tunnels, and passing all the received data packets through a single tunnel which has less bandwidth than the plurality of tunnels through which the data packets were received.

There is further provided in accordance with some embodiments of the invention, a method of forwarding data packets by a base transceiver station, including receiving data packets, at the base transmission station, from a plurality of mobiles, and passing all the received data packets through a single tunnel which has less bandwidth than required if the plurality of mobiles were to all use concurrently a maximal bandwidth the mobile units are assigned.

There is further provided in accordance with some embodiments of the present invention, a base transceiver station, including an input interface for receiving data packets, an output interface which connects to one or more links, and a tunneling unit which passes all the data packets from the input interface which are directed to one of the links through a single tunnel on the link. Possibly, the input interface receives data packets from mobile units and/or from other base stations. Possibly, the tunneling unit passes all the data packets from the input interface through a single tunnel on a single link. Alternatively or additionally, the input interface receives data packets from a controller.

There is further provided in accordance with some embodiments of the present invention, a cellular fixed network, including a plurality of base transceiver stations, a plurality of links which connect the base transceiver stations, and a controller which defines a permanently existent tunnel on at least one of the links, the tunnel existing regardless of whether the tunnel is used, and one or more links which connect the base station controller to one or more of the base stations.

There is further provided in accordance with some embodiments of the present invention, a cellular fixed network, including a plurality of base transceiver stations, a plurality of links which connect the base transceiver stations, and a base station controller which defines at least one tunnel on the link, which tunnel is used or packets to or from a plurality of mobile units, and one or more links which connect the base station controller to one or more of the base stations.

### BRIEF DESCRIPTION OF THE DRAWINGS

Particular non-limiting embodiments of the invention will be described with reference to the following description of embodiments in conjunction with the figures. Identical structures, elements or parts which appear in more than one figure are preferably labeled with a same or similar number in all the figures in which they appear, in which:
Fig. 1 is a schematic illustration of a cellular network, in accordance with an exemplary embodiment of the invention;
Fig. 2 is an enlarged schematic illustration of the links connecting to a BTS in the network of Fig. 1, in accordance with an exemplary embodiment of the present invention; and
Fig. 3 is a schematic flow chart of the actions of a cellular network during a data packet session, in accordance with an exemplary embodiment of the present invention.

### DETAILED DESCRIPTION OF EMBODIMENTS

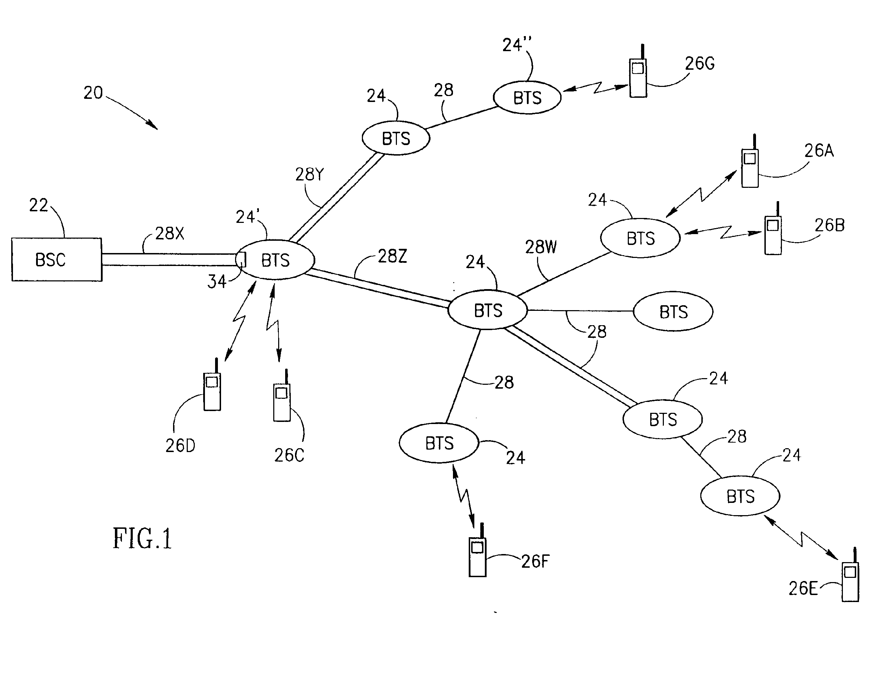

Fig. 1 is a schematic illustration of a cellular network 20, in accordance with an exemplary embodiment of the invention. Network 20 comprises a plurality of base transceiver stations (BTSs) 24 which wirelessly contact mobile units 26 serviced by network 20. BTSs 24 are connected in a tree topology to a regional base station controller (BSC) 22. One or more BTSs (24' in fig. 1) are connected directly to BSC 22. The rest of BTSs 24 are connected to BSC 22 through other BTSs 24. Thus, some of BTSs 24 (e.g., 24') receive data packets which are headed to BSC 22 both directly from mobile units 26 and from other BTSs 24. Other BTSs 24 (e.g., 24") are leaves in the tree topology and receive data packets directed to BSC 22 only directly from mobiles 26. BTSs 24 are connected with each other and to BSC 22 through links 28 which comprise cable wires, or other communication links, such as wireless omnidirectional links.

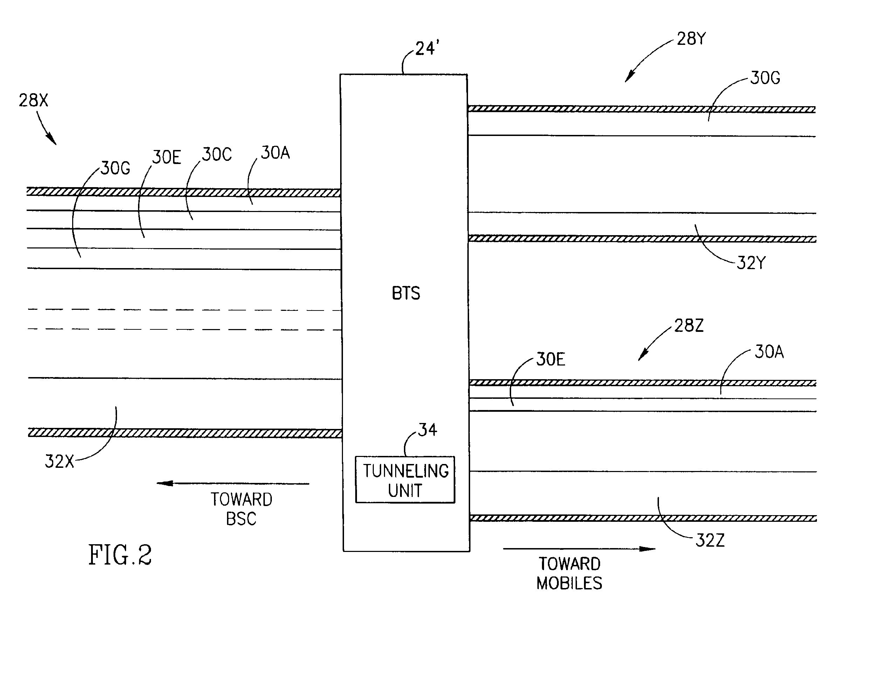

Reference is additionally made to Fig. 2 which is an enlarged schematic functional illustration of a BTS 24' and links 28X, 28Y and 28Z connected thereto, in accordance with an exemplary embodiment of the present invention. When a mobile unit 26 is engaged in a voice call, the mobile unit is allocated a single channel 30 for the call along the links 28 from the BTS 24 servicing the mobile 26 to BSC 22. In the example of Figs. 1 and 2, mobiles 26A, 26C, 26E and 26G are assumed to be engaged in voice calls. Therefore, channels 30A, 30C, 30E and 30G are allocated to these mobiles, respectively. Channel 30A, for example, runs along links 28X, 28Z and 28W from BSC 22 to the BTS 24 which services mobile 26A (Fig. 1).

Mobiles 26B, 26D and 26F on the other hand are assumed to be engaged in data packet sessions in which they transmit and/or receive data packets. Mobiles 26B, 26D and 26F use common tunnels 32 which are located in each of the links 28 along the path from BSC 22 to the BTSs 24 servicing mobiles 26B, 26D and 26F which are engaged in data packet sessions. For example, the data packets from mobile 26B are passed to BSC 22 through tunnels 32 within links 28W, 28Z and 28X.

The term tunnel refers in the present application and claims to a group of channels which are correlated such that a packet entering the tunnel may pass through any of the channels (one or more) included in the tunnel regardless of the source, contents and destination of the packet.

Each BTS 24 possibly comprises a GPRS tunneling unit 34 which passes all the data packets received by the BTS, which are headed to BSC 22, into a single tunnel 32 (for example, BTS 24' passes all its received packets into tunnel 32X). Further possibly, tunneling units 34 distribute the data packets received from BSC 22 to tunnels 32 leading to the BTSs 24 which service the mobiles 26 to which the packets are destined. Data packets directed to mobiles serviced by the BTS 24 hosting the tunneling unit 34 are passed directly to the hosting BTS 24. For example, in Fig. 2, tunneling unit 34 of BTS 24' distributes the packets it receives from BSC 22 between tunnels 32Y and 32Z, and the mobiles serviced by BTS 24'. It is noted that, tunneling units 34 may be implemented as integral parts of BTSs 24 and/or as separate units which interact with the BTS.

In some embodiments of the invention, the data packets sent from BSC 22 are encapsulated with additional bits which are used by tunneling units 34 to direct the packets through BTSs 24 to the destination mobile. The encapsulation bits possibly state the identity of the BTS 24 to which the packets are destined or list the route of BTSs through which the packet is to pass. Alternatively or additionally, a signaling scheme related to the data packet traffic is used, possibly in conjunction with the in-band information, to direct the packets to their destination BTS. Further alternatively or additionally, tunneling unit 34 examines a header of the original data packet in order to determine to which mobile 26 or BTS 24 the packet is to be forwarded.

Referring for example to BTS 24', data packets from mobiles 26B and 26F are received at BTS 24' through tunnel 32Z. BTS 24' receives data packets directly from mobile 26D. All the received data packets are passed by BTS 24' to tunnel 32X. It is noted that BTS 24' may receive data packets from a plurality of tunnels 32 in different links 28 and/or from a plurality of tunnels 32 in a single link 28 and/or from a plurality of mobiles 26 and all the data packets are tunneled into tunnel 32X.

The number of channels included in data tunnels 32 (or more generally the sizes of tunnels 32) is possibly dynamically adjusted according to the number of mobiles 26 which are engaged in data packet sessions using the tunnel. Possibly, tunnels 32 which are used by only a few mobiles 26 have a relatively large number of channels per mobile, while tunnels 32 which are used by many mobiles 26 have a lower number of channels per mobile. In some embodiments of the invention, the smallest tunnel 32, i.e., a tunnel used by only a single mobile 26, includes eight channels.

Possibly, the number of channels in tunnels 32 increases as the tunnels are closer to BSC 22. In some embodiments of the invention, the number of channels in a tunnel 32 incident on a BTS 24 (e.g., 24') leading toward BSC 22 (e.g., tunnel 32X), is less than the total number of channels in the tunnels 32 incident on the BTS 24 and leading away from BSC 22 (e.g., tunnels 32Y and 32Z) and the number of channels required for the mobiles 26 serviced directly by BTS 24'. This is because the number of channels in tunnel 32X is larger than in tunnels 32Y and 32Z and hence the statistical usage of the channels in tunnel 32X is at a higher percentage.

Although best performance is usually received when each link 28 contains only a single tunnel 32 for data packets, in some embodiments of the invention, a plurality of tunnels are allocated in some or all of links 28 of network 20. For example, in some embodiments of the invention, one or more links 28 have a tunnel 32 for data packets from mobiles 26 directly connected to a BTS 24 incident on the link, and another tunnel 32 for data packets received by the BTS incident on the link from other BTSs. Alternatively or additionally, data packets from mobiles 26 with high quality of service are passed through a first tunnel 32 and other data packets are passed through a second tunnel 32. Further alternatively or additionally, a mobile 26 may be allocated dedicated channel groups, similar to channels 30 allocated for voice calls, which are used only by data packets of the mobile. Such channel groups are possibly allocated to high priority users who pay accordingly.

In some embodiments of the invention, each link 28 includes a permanent tunnel (e.g., 32Y) regardless of whether the link is used by any of mobiles 26 in a data packet session. In some embodiments of the invention, the permanent tunnel is of a minimal number of channels, e.g., eight channels. Thus, the entire link 28 can not be used for voice calls which would block mobiles 26 in a certain region from receiving data packet services. In addition, keeping a permanent data tunnel 32 allows quick establishment of data service connections between a BTS 24 and BSC 22. For example, when a mobile 26 moves from the region of one BTS 24 to the region of another BTS which was not handling any data packet services it does not need to wait for the allocation of a data tunnel 32. In addition, it is not possible to receive a busy signal because no channels are available.

In some embodiments of the invention, network 20 provides broadcast services. Broadcast packets received by BSC 22 are optionally passed in a single copy to each of the BTSs 24 connected to the BSC. Each BTS receiving the broadcast packet possibly passes the packet to all the BTSs to which the receiving BTS is connected except for the BTS from which the packet was received. In addition, the receiving BTS transmits the broadcast packet to all the terminals which belong to a broadcast group of the broadcast packet. Thus, only a single copy of the broadcast packet is sent over each tunnel 32, and each BTS 24 receives only a single copy of the broadcast packet regardless of the number of mobiles 26 serviced by the BTS.

In some embodiments of the invention, the broadcast packet is transmitted to all the mobiles 26 in the region of the BTS, regardless of whether they are participating currently in a data packet session. In this embodiment, each of links 28 possibly has a permanent data tunnel 32, as described above, so that the broadcast messages may be passed to mobiles not currently engaged in data packet sessions. In addition, the number of channels included in data tunnels 32 are possibly adjusted to accommodate the broadcast packets.

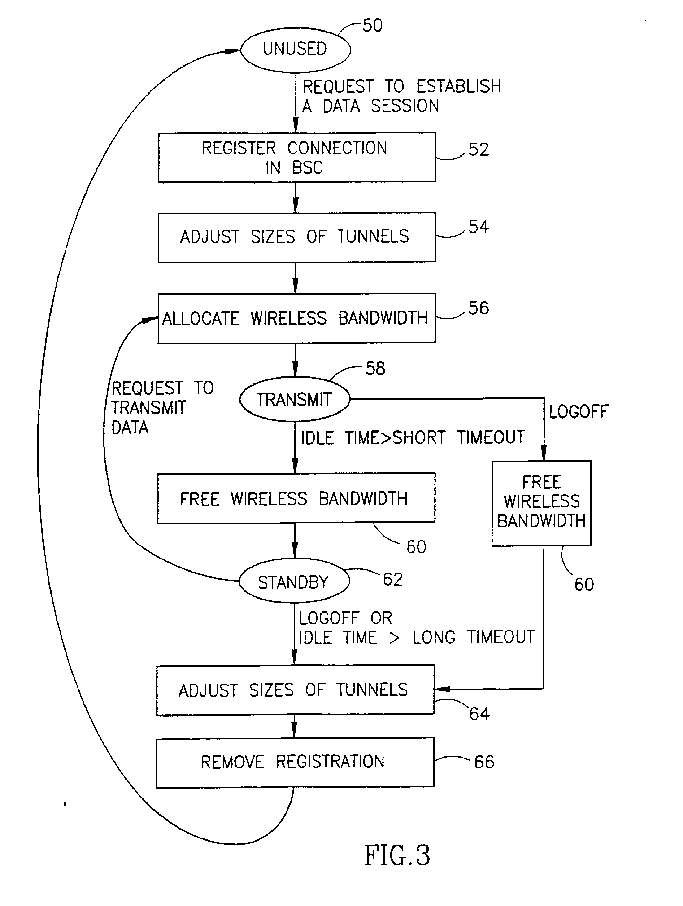

Fig. 3 is a schematic flow chart of the actions of network 20 during a data packet session, in accordance with an exemplary embodiment of the present invention. Mobile 26 is generally in an unused state 50, in which it is not engaged in a connection. When a mobile 26 requests to establish a data session, BSC 22 registers (52) the session and adjusts (54) the sizes of the tunnels 32 along the path from BSC 22 to the BTS 24 servicing the mobile. The sizes of tunnels 32 are adjusted to accommodate the additional packets transmitted to and from the mobile 26. When tunnels 32 are enlarged, the additional channels in the tunnels 32 come from unallocated channels on the respective links 28. The servicing BTS 24 allocates (56) wireless bandwidth between the mobile 26 and the servicing BTS. The mobile 26 then moves into a transmission state 58 in which the mobile transmits and receives data packets. If for some reason the mobile does not transmit data packets for longer than a short time-out period, the servicing BTS 24 frees (60) the allocated wireless bandwidth and the mobile moves into a semi-connected state 62. The sizes of tunnels 32 along the path from the servicing BTS 24 and BSC 22, however, as well as all other settings of network 20 in BSC 22 and the servicing BTS 24, are not changed and they remain as if mobile 26 is still in transmission state 58.

When the mobile 26 needs to transmit again, it notifies the servicing BTS 24 which re-allocates (58) wireless bandwidth. Mobile 26 possibly sends the notification using the same method as is used to initiate a new call from within unused state 50.

The time required to allocate wireless bandwidth is generally very short, i.e., less than a second, unlike the time required to allocate channels 30 which is substantially larger. On the other hand, the cost of the wireless bandwidth is usually much larger than the cost of the allocation of channels 30. It is noted that the user of mobile 26 does not necessarily know that the mobile moved into semi-connected state 62, as the time required to return to transmission state 58 is very short.

When the data session is finished, the user of mobile 26 logs off and BSC 22 possibly adjusts (64) the sizes of the relevant connections 32 due to the logoff of mobile 26. In addition, BSC 22 possibly removes (66) the registration of the mobile 26. Mobile 26 then moves back to the unused state 50.

In some embodiments of the invention, when mobile 26 is in semi-connected state 62 for a long time-out period, e.g., ten times the short time-out period, mobile 26 logs-off automatically.

In some embodiments of the present invention, mobiles 26 in the semi-connected state remain with a small amount of allocated wireless bandwidth, by freeing most of, but not all, their allocated wireless bandwidth when moving into semi-connected state 62. Thus, the mobiles can move into transmission state very fast using the allocated wireless bandwidth. In some embodiments of the invention, after a predetermined period (e.g., 30 seconds) in semi-connected state 62, the rest of the wireless bandwidth is freed.

In some embodiments of the invention, the length of the short time-out period and/or the length of the long time-out period are adjustable by the user of mobile 26. Alternatively or additionally, the length of the short time-out period and/or the length of the long time-out period are adjusted automatically according to the usage patterns of mobile 26. Further alternatively or additionally, the lengths of the time-out periods are adjusted automatically according to the load on tunnels 32 and/or on the wireless bandwidth.

It is noted that the principles of the present invention apply both to transmission from the mobile to the BSC and to transmission from the BSC to the mobile, *mutatis mutandis.* Although some of the above descriptions relate to transmission in only one direction, these descriptions pertain as well to transmission in the other direction.

It is further noted that although the above description relates to data packet sessions as being initiated from a mobile, the principles of the present invention pertain also to sessions which are initiated from a remote location to the mobile.

It is further noted that some of the above descriptions state various tasks as being performed by mobile 26, BTS 24 or BSC 22. These descriptions are brought only as an example, and in some embodiments of the invention other apparatus perform these tasks or parts of these tasks.

It will be appreciated that the above described methods may be varied in many ways, including, changing the order of steps, and the exact implementation used. It should also be appreciated that the above described description of methods and apparatus are to be interpreted as including apparatus for carrying out the methods and methods of using the apparatus.

The present invention has been described using non-limiting detailed descriptions of embodiments thereof that are provided by way of example and are not intended to limit the scope of the invention. It should be understood that features described with respect to one embodiment may be used with other embodiments and that not all embodiments of the invention have all of the features shown in a particular figure. Variations of embodiments described will occur to persons of the art. Furthermore, the terms "comprise," "include," "have" and their conjugates, shall mean, when used in the claims, "including but not necessarily limited to." The scope of the invention is limited only by the following claims:

## Claims

1. A method of forwarding packetized signals from a first base station to a second base station, **characterized in that** it comprises:
receiving, at the first base station, of signals from a plurality of mobile units (26);
passing signals from a plurality of different mobile units (26) to the second base station through a single tunnel (32).

2. A method according to claim 1, wherein receiving of signals from a plurality of units (26) comprises receiving at least some of the signals from one or more third base stations.

3. A method according to claim 1 or claim 2, wherein receiving of signals from a plurality of units (26) comprises receiving general packet radio service data packets.

4. A method according to any of the preceding claims, wherein passing the signals through a single tunnel (32) comprises passing signals from the same mobile units (26) through different channels (30) included in the tunnel (32).

5. A method according to any of the preceding claims, wherein receiving of signals at the first base station comprises receiving signals at a base transceiver station.

6. A method according to any of the preceding claims, wherein receiving of signals at the first base station comprises receiving signals at a base station controller.

7. A method according to any of the preceding claims, wherein passing signals to the second base station comprises passing signals to a base transceiver station.

8. A method of managing links (28) of a cellular fixed network, **characterized in that** it comprises:
providing a plurality of links (28) which connect base transceiver stations to a base station controller, and
allocating at least one tunnel (32) for data packets from a plurality of mobile units (26), on at least one of the links (28) of the network.

9. A method according to claim 8, wherein the tunnel (32) is a permanently existing tunnel. (32).

10. A method according to claim 9, wherein allocating the at least one permanently existing tunnel (32) comprises allocating at least one permanently existing tunnel (32) on each of the links (28) of the network.

11. A method according to claim 9 or claim 10, wherein allocating the at least one permanently existing tunnel (32) comprises allocating a single tunnel (32) on each link (28).

12. A method according to any of claims 9-11, wherein allocating the tunnel (32) comprises allocating at least one tunnel (32) of an adjustable bandwidth.

13. A method according to claim 12, comprising adjusting the bandwidth of the at least one tunnel (32) responsive to a load of the network.

14. A method according to claim 13, wherein adjusting the bandwidth of the at least one tunnel (32) comprises reducing the ratio between the bandwidth of the tunnel (32) and the number of
mobile units (26) which use the tunnel (32) as the number of mobile units (26) using the tunnel (32) increases.

15. A method according to claim 13 or claim 14, wherein adjusting the bandwidth of the at least one tunnel (32) comprises setting the ratio between the bandwidth of the tunnel (32) and the number of mobile units (26) which use the tunnel (32) to less than eight times the bandwidth used for channels (30).

16. A method according to claim 8, wherein allocating at least one tunnel (32) for data packets from a plurality of mobile units (26) on at least one of the links (28) of the network comprises
allocating no more than one tunnel (32) for data packets on each of the links (28) of the network.

17. A method according to claim 5, further comprising:
receiving data packets, at the base transceiver station, through a plurality of tunnels (32); and
passing all the received data packets through the single tunnel (32) which has less bandwidth than the plurality of tunnels (32) through which the data packets were received.

18. A method according to claim 5, further comprising:
receiving data packets, at the base transceiver station, from the plurality of mobile units (26); and
passing all the received data packets through the single tunnel (32) which has less bandwidth than required if the plurality of mobile units (26) were to all use concurrently a maximal bandwidth the mobile units (26) are assigned,

19. A base transceiver station, **characterized in that** it comprises:
an input interface for receiving data packets;
an output interface for connecting to one or more links (28); and
a tunneling (34) unit for passing, all the data packets from the input interface which are directed to one of the links (28) through a single tunnel (32) on the link (28).

20. A station according to claim 19, wherein the input interface is for receiving data packets from mobile units (26).

21. A station according to claim 19 or claim 20, wherein the input interface is for receiving data packets from other base transceiver stations.

22. A station according to claim 21, wherein the tunneling (34) unit is for passing all the data packets from the input interface through a single tunnel (32) on a single link (28).

23. A station according to any of claims 19-22, wherein the input interface is for receiving data packets from a base station controller.

24. A cellular fixed network, **characterized in that** it comprises:
a plurality of base transceiver stations;
a plurality of links (28) for connecting the base transceiver stations;
a base station controller for defining at least one tunnel (32) on the link (28), which tunnel (32) is used for packets to or from a plurality of mobile units (26); and
one or more links (28) for connecting the base station controller to one or more of the base transceiver stations.

25. A cellular fixed network according to claim 24, wherein at least one tunnel (32) is a permanently existent tunnel (32), the tunnel (32) existing regardless of whether the tunnel (32) is used.

## Patentansprüche

1. Verfahren zum Weiterleiten paketierter Signale von einer ersten Basisstation an eine zweite Basisstation, **dadurch gekennzeichnet, dass** es umfasst:
Empfangen, an der ersten Basisstation, von Signalen von einer Mehrzahl von Mobilstationen (26);
Übergeben von Signalen von einer Mehrzahl verschiedener Mobilstationen (26) an die zweite Basisstation durch einen einzelnen Tunnel (32).

2. Verfahren nach Anspruch 1, worin Empfangen von Signalen von einer Mehrzahl von Mobilstationen (26) Empfangen von wenigstens einigen der Signale von einer oder mehreren dritten Basisstationen umfasst.

3. Verfahren nach Anspruch 1 oder Anspruch 2, worin Empfangen von Signalen von einer Mehrzahl von Stationen (26) Empfangen von Datenpaketen eines allgemeinen paketorientierten Funkdienstes umfasst.

4. Verfahren nach einem der vorangegangenen Ansprüche, worin Übergeben der Signale durch einen einzelnen Tunnel (32) Übergeben von Signalen von denselben Mobilstationen (26) durch in dem Tunnel (32) beinhaltete verschiedene Kanäle (30) umfasst.

5. Verfahren nach einem der vorangegangenen Ansprüche, worin Empfangen von Signalen an der ersten Basisstation Empfangen von Signalen an einer Mobilfunksendeanlage umfasst.

6. Verfahren nach einem der vorangegangenen Ansprüche, worin Empfangen von Signalen an der ersten Basisstation Empfangen von Signalen an einer Basisstations-Steuereinrichtung umfasst.

7. Verfahren nach einem der vorangegangenen Ansprüche, worin Übergeben von Signalen an die zweite Basisstation Übergeben von Signalen an eine Mobilfunksendeanlage umfasst.

8. Verfahren zum Verwalten von Verbindungen (28) eines Mobilfunkfestnetzes, **dadurch gekennzeichnet, dass** es umfasst:
Bereitstellen einer Mehrzahl von Verbindungen (28), welche Mobilfunksendeanlagen mit einer Basisstations-Steuereinrichtung verbinden; und
Belegen wenigstens eines Tunnels (32) für Datenpakete von einer Mehrzahl von Mobilstationen (26) auf wenigstens einer der Verbindungen (28) des Netzes.

9. Verfahren nach Anspruch 8, worin der Tunnel (32) ein dauerhaft bestehender Tunnel (32) ist.

10. Verfahren nach Anspruch 9, worin Belegen des wenigstens einen dauerhaft bestehenden Tunnels (32) Belegen wenigstens eines dauerhaft bestehenden Tunnels (32) auf jeder der Verbindungen (28) des Netzes umfasst.

11. Verfahren nach Anspruch 9 oder Anspruch 10, worin Belegen des wenigstens einen dauerhaft bestehender Tunnels (32) Belegen eines einzelnen Tunnels (32) auf jeder Verbindung (28) umfasst.

12. Verfahren nach einem der Ansprüche 9 bis 11, worin Belegen des Tunnels (32) Belegen wenigstens eines Tunnels (32) mit einer einstellbaren Bandbreite umfasst.

13. Verfahren nach Anspruch 12, umfassend Einstellen der Bandbreite des wenigstens eines Tunnels (32) in Antwort auf eine Netzlast.

14. Verfahren nach Anspruch 13, worin Einstellen der Bandbreite des wenigstens einen Tunnels (32) Reduzieren des Verhältnisses zwischen der Bandbreite des Tunnels (32) und der Anzahl von Mobilstationen (26) umfasst, welche den Tunnel (32) benutzen, wenn die Anzahl von den Tunnel (32) benutzenden Mobilstationen (26) zunimmt.

15. Verfahren nach Anspruch 13 oder Anspruch 14, worin Einstellen der Bandbreite des wenigstens einen Tunnels (32) Einstellen des Verhältnisses zwischen der Bandbreite des Tunnels (32) und der Anzahl von Mobilstationen (26), welche den Tunnel (32) benutzen, auf weniger als acht mal der für Kanäle (30) verwendeten Bandbreite umfasst.

16. Verfahren nach Anspruch 8, worin Belegen des wenigstens einen Tunnels (32) für Datenpakete von einer Mehrzahl von Mobilstationen (26) auf wenigstens einer der Verbindungen (28) des Netzes Belegen von nicht mehr als einen Tunnel (32) für Datenpakete auf jeder der Verbindungen (28) des Netzes umfasst.

17. Verfahren nach Anspruch 5, ferner umfassend:
Empfangen von Datenpaketen, an der Mobilfunksendeanlage, durch eine Mehrzahl von Tunneln (32); und
Übergeben aller der empfangenen Datenpakete durch den einzelnen Tunnel (32), welcher eine geringere Bandbreite als die Mehrzahl von Tunneln (32) aufweist, durch welche die Datenpakete empfangen wurden.

18. Verfahren nach Anspruch 5, ferner umfassend:
Empfangen von Datenpaketen, an der Mobilfunksendeanlage, von der Mehrzahl von Mobilstationen (26); und
Übergeben aller der empfangenen Datenpakete durch den einzelnen Tunnel (32), welcher eine geringere Bandbreite als gefordert aufweist, wenn die Mehrzahl von Mobilstationen (26) alle gleichzeitig eine maximale Bandbreite nutzen, der die Mobilstationen (26) zugeordnet sind.

19. Mobilfunksendeanlage,
**dadurch gekennzeichnet, dass** sie umfasst:
eine Eingangsschnittstelle zum Empfangen von Datenpaketen;
eine Ausgangsschnittstelle zum Verbinden mit einer oder mehreren Verbindungen (28); und
eine Tunneleinheit (34) zum Übergeben aller der Datenpakete von der Eingangsschnittstelle, welche auf eine der Verbindungen (28) gerichtet sind, durch einen einzelnen Tunnel (32) auf der Verbindung (28).

20. Anlage nach Anspruch 19, worin die Eingangsschnittstelle zum Empfangen von Datenpaketen von Mobilstationen (26) hergerichtet ist.

21. Anlage nach Anspruch 19 oder Anspruch 20, worin die Eingangsschnittstelle zum Empfangen von Datenpaketen von anderen Mobilfunksendeanlagen hergerichtet ist.

22. Anlage nach Anspruch 21, worin die Tunneleinheit (34) zum Übergeben aller der Datenpakete von der Eingangsschnittstelle durch einen einzelnen Tunnel (32) auf einer einzelnen Verbindung (28) hergerichtet ist.

23. Anlage nach einem der Ansprüche 19 bis 22, worin die Eingangsschnittstelle zum Empfangen von Datenpaketen von einer Basisstations-Steuereinrichtung hergerichtet ist.

24. Mobilfunkfestnetz,
**dadurch gekennzeichnet, dass** es umfasst:
eine Mehrzahl von Mobilfunksendeanlagen;
eine Mehrzahl von Verbindungen (28) zum Verbinden der Mobilfunksendeanlagen;
eine Basisstations-Steuereinrichtung zum Definieren wenigstens eines Tunnels (32) auf der Verbindung (28), welcher Tunnel (32) für Pakete an eine oder von einer Mehrzahl von Mobilstationen (26) verwendet wird; und
ein oder mehrere Verbindungen (28) zum Verbinden der Basisstations-Steuereinrichtung mit einer oder mehreren der Mobilfunksendeanlagen.

25. Mobilfunkfestnetz nach Anspruch 24, worin der wenigstens eine Tunnel (32) ein dauerhaft bestehender Tunnel (32) ist, wobei der Tunnel (32) unabhängig davon besteht, ob der Tunnel (32) verwendet wird.

## Revendications

1. Procédé de transmission de signaux en paquets d'une première station de base à une deuxième station de base, **caractérisé en ce qu'**il comprend :
◆ la réception, au niveau de la première station de base, de signaux provenant d'une pluralité d'unités mobiles (26) ;
◆ le passage des signaux provenant d'une pluralité de différentes unités mobiles (26) à la deuxième station de base par le biais d'un seul tunnel (32).

2. Procédé selon la revendication 1, dans lequel la réception des signaux provenant d'une pluralité d'unités (26) comprend la réception d'au moins certains des signaux provenant d'une ou de plusieurs troisième(s) station(s) de base.

3. Procédé selon 1a revendication 1 ou la revendication 2, dans lequel la réception des signaux provenant d'une pluralité d'unités (26) comprend la réception de paquets de données d'un service radio général à commutation de paquets.

4. Procédé selon l'une quelconque des revendications précédentes, dans lequel le passage des signaux par le biais d'un seul tunnel (32) comprend le passage des signaux provenant des mêmes unités mobiles (26) par le biais de différents canaux (30) compris dans le tunnel (32).

5. Procédé selon l'une quelconque des revendications précédentes, dans lequel la réception des signaux au niveau de la première station de base comprend la réception des signaux au niveau d'une station d'émetteur-récepteur de base.

6. Procédé selon l'une quelconque des revendications précédentes, dans lequel- la réception des signaux au niveau de la première station de base comprend la réception des signaux au niveau d'un contrôleur de la station de base.

7. Procédé selon l'une quelconque des revendications précédentes, dans lequel le passage des signaux à la deuxième station de base comprend le passage des signaux à une station d'émetteur-récepteur de base.

8. Procédé de gestion de liaisons (28) d'un réseau cellulaire fixe, **caractérisé en ce qu'**il comprend :
◆ la fourniture d'une pluralité de liaisons (28) qui connectent des stations d'émetteur-récepteur de base à un contrôleur de la station de base ; et
◆ l'attribution d'au moins un tunnel (32) pour des paquets de données provenant d'une pluralité d'unités mobiles (26), sur au moins l'une des liaisons (28) du réseau.

9. Procédé selon la revendication 8, dans lequel le tunnel (32) est un tunnel existant de façon permanente (32).

10. Procédé selon la revendication 9, dans lequel l'attribution de l'au moins un tunnel existant de façon permanente (32) comprend l'attribution d'au moins un tunnel existant de façon permanente (32) sur chacune des liaisons (28) du réseau.

11. Procédé selon la revendication 9 ou la revendication 10, dans lequel l'attribution de l'au moins un tunnel existant de façon permanente (32) comprend l'attribution d'un seul tunnel (32) sur chaque liaison (28).

12. Procédé selon l'une quelconque des revendications 9 à 11, dans lequel l'attribution du tunnel (32) comprend l'attribution d'au moins un tunnel (32) d'une bande passante ajustable.

13. Procédé selon la revendication 12, comprenant l'ajustement de la bande passante de l'au moins un tunnel (32) en réponse à une charge du réseau.

14. Procédé selon la revendication 13, dans lequel l'ajustement de la bande passante de l'au moins un tunnel (32) comprend la réduction du rapport entre la bande passante du tunnel (32) et le nombre d'unités mobiles (26) qui utilisent le tunnel (32) à mesure que le nombre d'unités mobiles (26) utilisant le tunnel (32) augmente.

15. Procédé selon la revendication 13 ou la revendication 14, dans lequel l'ajustement de la bande passante de l'au moins un tunnel (32) comprend la définition du rapport entre la bande passante du tunnel (32) et le nombre d'unités mobiles (26) qui utilisent le tunnel (32) à moins de huit fois la bande passante utilisée pour les canaux (30).

16. Procédé selon la revendication 8, dans lequel l'attribution de l'au moins un tunnel (32) pour des paquets de données provenant d'une pluralité d'unités mobiles (26) sur au moins l'une des liaisons (28) du réseau comprend l'attribution de pas plus d'un tunnel (32) pour les paquets de données sur chacune des liaisons (28) du réseau.

17. Procédé selon la revendication 5, comprenant en outre :
◆ la réception de paquets de données, au niveau de la station d'émetteur-récepteur de base, par le biais d'une pluralité de tunnels (32) ; et
◆ le passage de tous les paquets de données reçus par le biais du seul tunnel (32) qui a moins de bande passante que la pluralité de tunnels (32) par le biais desquels les paquets de données ont été reçus.

18. Procédé selon la revendication 5, comprenant en outre :
◆ la réception de paquets de données, au niveau de la station d'émetteur-récepteur de base, provenant de la pluralité d'unités mobiles (26) ; et
◆ le passage de tous les paquets de données reçus par le biais du seul tunnel (32) qui a moins de bande passante que nécessaire si la pluralité d'unités mobiles (26) utilisaient toutes simultanément une bande passante maximale à laquelle les unités mobiles (26) sont attribuées.

19. Station d'émetteur-récepteur de base, **caractérisée en ce qu'**elle comprend :
◆ une interface d'entrée pour recevoir les paquets de données ;
◆ une interface de sortie pour se connecter à une ou plusieurs liaison(s) (28) ; et
◆ une unité de tunnellisation (34) pour passer tous les paquets de données de l'interface d'entrée qui sont dirigés vers l'une des liaisons (28) par le biais d'un seul tunnel (32) sur la liaison (28).

20. Station selon la revendication 19, dans laquelle l'interface d'entrée sert à recevoir des paquets de données provenant des unités mobiles (26).

21. Station selon la revendication 19 ou la revendication 20, dans laquelle l'interface d'entrée sert à recevoir des paquets de données provenant d'autres stations d'émetteur-récepteur de base.

22. Station selon la revendication 21, dans laquelle l'unité de tunnellisation (34) sert à passer tous les paquets de données de l'interface d'entrée par le biais d'un seul tunnel (32) sur une seule liaison (28).

23. Station selon l'une quelconque des revendications 19 à 22, dans laquelle l'interface d'entrée sert à recevoir des paquets de données provenant d'un contrôleur de la station de base.

24. Réseau cellulaire fixe, **caractérisé en ce qu'**il comprend :
◆ une pluralité de stations d'émetteur-récepteur de base ;
◆ une pluralité de liaisons (28) pour connecter les stations d'émetteur-récepteur de base ;
◆ un contrôleur de la station de base pour définir au moins un tunnel (32) sur la liaison (28), ce tunnel (32) étant utilisé pour des paquets vers une pluralité d'unités mobiles (26), ou depuis celles-ci ; et
◆ une ou plusieurs liaison(s) (28) pour connecter le contrôleur de la station de base à une ou plusieurs des stations d'émetteur-récepteur de base.

25. Réseau cellulaire fixe selon la revendication 24, dans lequel au moins un tunnel (32) est un tunnel existant de façon permanente (32), le tunnel (32) existant indépendamment de si le tunnel (32) est utilisé.
